# EUROPEAN PATENT APPLICATION

(11) **EP 1 889 561 A2**
(43) Date of publication of application: **20.02.2008**
(21) Application number: 07012776.6
(22) Date of filing: 02.07.2007
(51) Int. Cl.: A47J 45/06

(54) **Food cooking container including a thermal indicator**

(30) Priority: 31.07.2006 IT MI20060278 U
(71) Applicant: BALLARINI PAOLO & FIGLI S.p.A., 46017 Rivarolo Mantovano (MN) (IT)
(72) Inventor: Ferron, Jacopo, 26041 Casalmaggiore (IT)
(74) Representative: Mayer, Hans Benno

(57) **Abstract**

A food cooking container (1), including a thermal indicator, has a container handle (4) with a seat (8) for engaging an envelope (9) which is thermally conductively coupled to the cooking container (1) body, the envelope (9) having an opening (10) provided for receiving a stem element (12) of a temperature measuring and indicating device (13), the stem (12) having a region including a plurality of detecting sensors (14), contacting the envelope walls.

## Description

### BACKGROUND OF THE INVENTION

The invention relates to a food cooking container.

As it is known, conventional pots and pans for cooking foods usually comprise temperature signaling devices which are built-in, for example, in the container handles and are designed to provide an information related to the achieved cooking temperature or a safety temperature related to the handling of the pots and pans at the end of the cooking operation.

Prior cooking container temperature signaling means usually comprise thermochromatic or liquid crystal die coatings, which, depending on the temperature of the cooking container, change their colors.

Temperature indicators including electronic circuits power supplied by batteries and used for signaling the achieved temperature of the cooking vessel by digital signals, light signals or sounds are also known.

Prior food cooking container temperature signaling systems, however, have the drawback that, as they comprise thermochromatic dies or pigments, the latter, because of a repeated cleansing of the containers, loose their indicating efficiency.

Yet other prior temperature signaling devices have the drawback that they require specifically designed handles, including contoured recesses which are designed according to the shape of the signaling device are also available.

The latter signaling devices require that suitable molds be designed for making the container handles, which inevitably increases the cost of the end products.

Moreover, an integrating coupling (for example by glueing) of the temperature signaling devices may cause waterproofing or thermal strength problems as, for example, the cooking container is cleaned in a dishwashers.

A further drawback of prior temperature indicating devices is that for each cooking container or vessel, for example a pan, a pot or the like, it is necessary to permanently mount the temperature signaling device in the handle of each individual container, which also greatly increases the cost of the food container.

### SUMMARY OF THE INVENTION

Accordingly, the aim of the present invention is to overcome the above mentioned drawbacks of the prior art, by providing a food cooking container having a container handle which, as required, can house a container temperature signaling device. The above aim is achieved by the fact that the handle or gripping portion of the food cooking container comprises a recess, in which can be engaged an envelope, thermoconductively coupled to the body of the food cooking container, that said envelope has an opening for receiving therein a stem of a temperature measuring and signaling device, and that said stem has a region thereof including a plurality of detecting sensors, adapted to contact the walls of the envelope.

Thus, owing to the provision of the above device, it is possible to form in the food cooking container handle an opening which can be made in a simple manner and independently from the shape of the handle. In this temperature measurement opening, is engaged an envelope, advantageously made of a metal sheet material, having a bottom lug which is locked, by the handle clamping screw thereby transmitting heat from the cooking container to the envelope so that, by introducing the measurement stem, having a sensor including region, it would be possible to provide temperature indicating signals, indicating the temperature in the food cooking container.

As the cooking container must be washed, the thermal signaling device can be easily removed, and the removed device may be freely used in combination with other food cooking containers, having a respective receiving seat or recess.

### BRIEF DESCRIPTION OF THE DRAWINGS

The present invention will be disclosed in a more detailed manner hereinafter with reference to an exemplary embodiment thereof which is shown in the accompanying drawings, where:
Figure 1 schematically shows a portion of a pot having a pot handle including a recess for engaging therein the metal envelope or vessel;
Figure 2 shows the container handle and metal envelope engaged in said recess and locked by a clamping screw therein; and
Figure 3 shows the handle - temperature measuring device assembly engaged in the metal envelope.

### DESCRIPTION OF THE PREFERRED EMBODIMENT

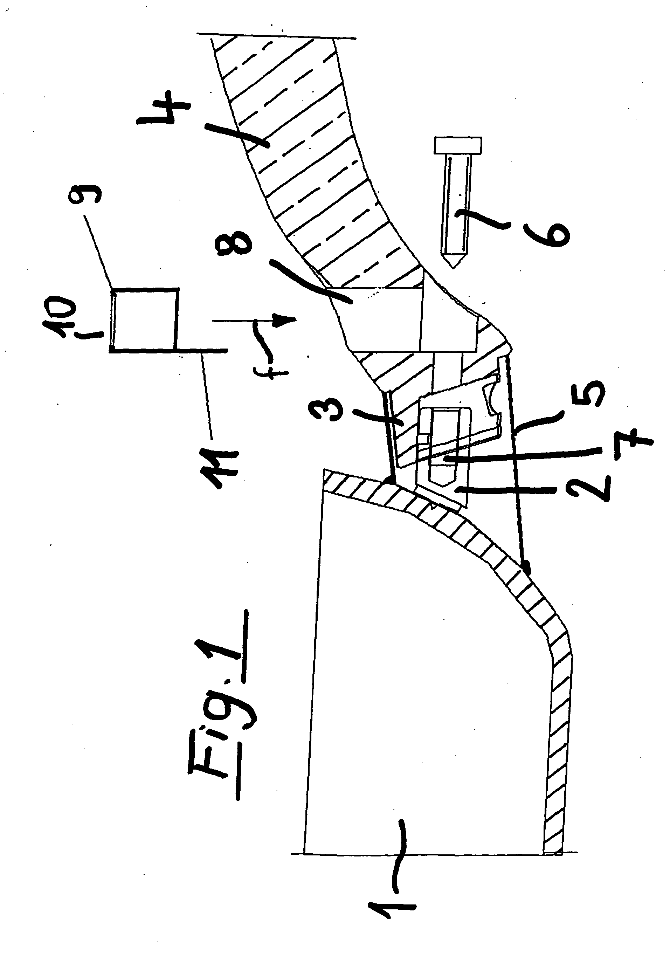

As is shown in figure 1, the food cooking container, for example a pan or pot 1, has a projecting stem element 2 receiving an end seat or recess 3 of a handle 4. Said end portion 3 will be encompassed by a tubular body 5 integral with the body of the pan 1.

The handle 4 is locked in any known manners, by a clamping screw 6 threaded in a threaded seat 7 of the projecting portion or lug 2.

More specifically, the handle comprises an upward open seat 8, in which, as indicated by the arrow (f), an envelope 9 advantageously made of a metal material can be engaged, said envelope having a cup-shape including a top opening 10 and a bottom extension 11.

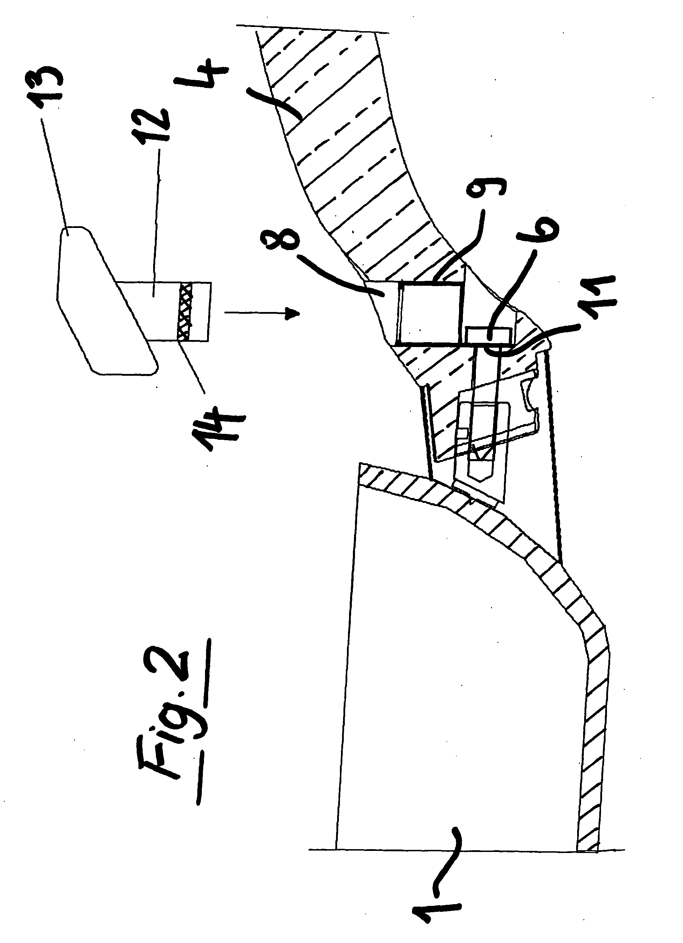

Figure 2 shows the metal envelope 9 engaged in the seat 8 of the handle 4, the extension 11 of the envelope being traversed by the clamping screw 6 which also operates as a heat transmission means, for transmitting the heat released by the body of the pan 1.

Above said handle 4 and under said seat 8, is provided a stem element 12 of a temperature measuring and signaling device 13, said stem 12 having a band portion 14 including a plurality of temperature sensors, for detecting, from the metal sheet envelope 9, the temperature in the container 1, for signaling said temperature to the device 13.

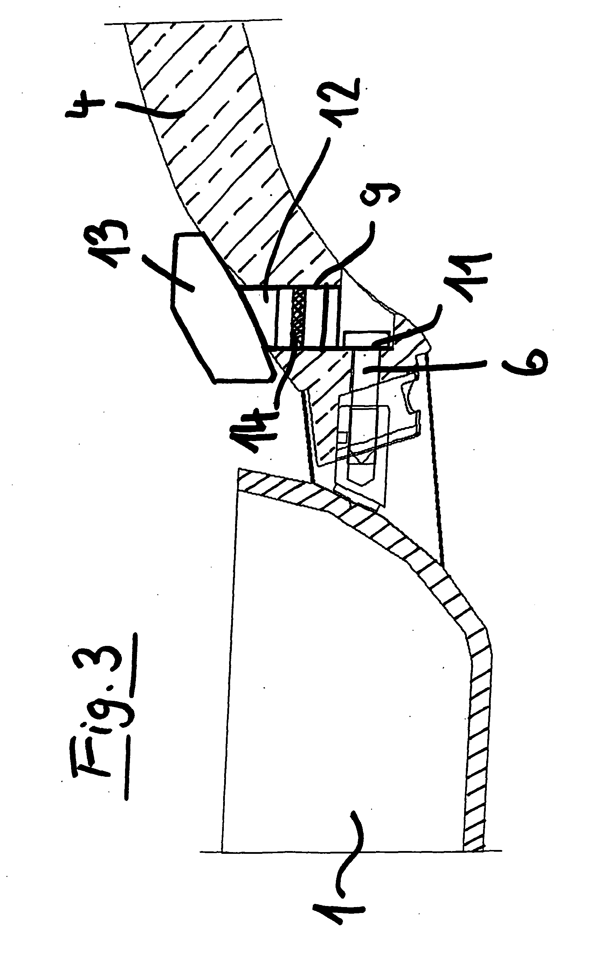

Figure 3 shows the pan 1 and pan handle 4, and from this figure it should be apparent that the end portion 11 of the metal envelope 9 is locked by the clamping screw 6.

In said envelope 9 is engaged the stem 12 having the sensor region 14, the temperature measuring device 13 bearing on the top portion of the handle 4.

Whilst the envelope 9 is permanently clamped inside the seat 8 of the handle 4, the device 12, 13, 14 can be removed, thereby it will be not affected by the moisture and cleansing agents used in washing the pan.

Moreover, the removed temperature signaling and measuring device 12, 13, 14 could be used for other food cooking containers having a configuration, shape and volume different from those of the container 1, as shown in figures 1, 2 and 3.

## Claims

1. A food cooking container (1) including a thermal indicator, **characterized in that** said food cooking container (1) has a container handle or gripping portion (4) including a seat (8) in which is engaged an envelope (9) thermoconductively coupled to a body of said food cooking container (1), that said envelope (9) has an opening (10) for receiving therein a stem portion (12) of a temperature measuring and signaling device (13) and that said stem portion (12) of said temperature measuring and signaling device (13) has a temperature sensor region including a plurality of temperature sensors (14) provided for contacting the walls of said envelope (9).

2. A food cooking container, according to claim 1, **characterized in that** said temperature measuring and signaling device (13) can be removed from the handle (4) of the food cooking container (1).

3. A food cooking container, according to claim 1, **characterized in that** said envelope (9), engaged in said seat (8) is made of a metal material.

4. A food cooking container, according to claim 1, **characterized in that** said envelope (9) is an extension (11) traversed by a clamping screw (6) and that said clamping screw (6) operates as a heat transmitting means for transmitting heat from the body of said food cooking container (1).

5. A food cooking container, according to claim 1, **characterized in that** said handle or gripping portion (4) is of a standard configuration and is provided with a seat (8) for receiving said envelope (9) therein.
